(19) Europäisches Patentamt
European Patent Office
Office européen des brevets

(11) Publication number: 0 046 695
B1

(12) # EUROPEAN PATENT SPECIFICATION

(45) Date of publication of patent specification: **08.01.86**

(51) Int. Cl.⁴: **C 08 G 77/04**, C 08 G 77/06, C 08 G 77/08, C 08 G 77/32, C 08 G 77/36, H 01 B 3/46

(21) Application number: **81303911.2**

(22) Date of filing: **26.08.81**

(54) **Ladder-like lower alkylpolysilsesquioxanes and process for their preparation.**

(30) Priority: **26.08.80 JP 116493/80**
**17.07.81 JP 110736/81**

(43) Date of publication of application:
**03.03.82 Bulletin 82/09**

(45) Publication of the grant of the patent:
**08.01.86 Bulletin 86/02**

(84) Designated Contracting States:
**DE FR GB**

(56) References cited:
**BE-A- 554 738**
**FR-A-1 472 047**
**US-A-2 465 188**
**US-A-2 568 384**
**US-A-4 242 252**

**Patents Abstracts of Japan Vol. 2, No. 122, 13 October 1978 page 2464C78**

**Chemical Abstracts vol. 81, no. 14, 7 October 1974 Columbus, Ohio, USA I.M. ZIMMER et al. "Properties of poly(methylsilsesquioxane) prepared during the hydrolysis of methyltrichlorosilane" page 9, column 2, abstract no. 78373r**

(73) Proprietor: **JAPAN SYNTHETIC RUBBER CO., LTD.**
**11-24, Tsukiji-2-chome Chuo-ku**
**Tokyo (JP)**

(72) Inventor: **Matsumura, Yoshio**
**14-30, Tsukimino-8-chome**
**Yamato-shi (JP)**
Inventor: **Nozue, Ikuo**
**29, Aobadai-2-chome**
**Midori-ku Yokohama (JP)**
Inventor: **Tomomitsu, Osahiko**
**29, Aobadai-2-chome**
**Midori-ku Yokohama (JP)**
Inventor: **Ukachi, Takashi**
**29, Aobadai-2-chome**
**Midori-ku Yokohama (JP)**
Inventor: **Suminoe, Taro**
**25-17, Komaba-1-chome**
**Meguro-ku Toyko (JP)**

(74) Representative: **Tubby, David George et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to new ladder-like lower alkylpolysilsesquioxanes capable of forming thin films having good heat resistance and which are thus suitable for use as insulating protective films (passivation films) or interlayer insulating films for integrated circuits.

Organopolysiloxanes having an atomic ratio of oxygen to silicon of 1.5:1 are generally called polysilsesquioxanes, of which the so-called "ladder-like" polysilsesquioxanes are of particular value in view of their good heat resistance. For this reason, considerable research has recently been undertaken on the techniques which enable such ladder-like polysilsesquioxanes to be used as insulating protective films or as interlayer insulating films for intergrated circuits. The resins used for these purposes are, in some cases, subjected to temperatures as high as 400°C or 500°C and, hence, they are required to have good heat resistance, good adhesiveness to substrates at elevated temperatures, good moisture resistance and good crack resistance. However, the known ladder-like lower alkylpolysilsesquioxanes have poor crack resistance, in other words, cracks tend to form when a thin film of the lower alkylpolysilsesquioxane on a substrate is heated and cured at an elevated temperature.

We have now surprisingly found that a ladder-like lower alkylpolysilsesquioxane having a specific molecular weight distribution, in particular a ladder-like lower alkylpolysilsesquioxane in which there is incorporated a specific amount of a portion having a specific relatively low, molecular weight, has particularly good crack resistance.

The present invention provides a lower alkylpolysilsesquioxane having a repeating unit of formula:

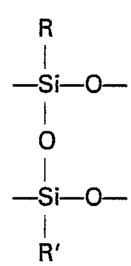

(in which R and R′ are the same or different and each represents a lower alkyl group), characterized in that from 15 to 30% by weight of the lower alkylpolysilsesquioxane is constituted by a portion having a standard polystyrene-reduced molecular weight of 20,000 or less, (preferably from 800 to 20,000) as measured by gel permeation chromatography (hereinafter referred to as "GPC").

In general, the ladder-like lower alkylpolysilsesquioxane of the present invention will have the formula:

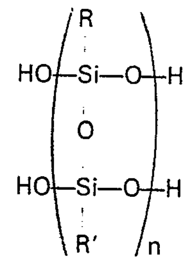

(in which R and R′ are as defined above and *n* represents the average degree of polymerization), however, it will be appreciated that the terminal groups (the hydroxy groups and hydrogen atoms) may be substantially varied by chemical modification, as is well-known in the art.

In the ladder-like lower alkylpolysilsesquioxanes of the present invention, R and R′, which may be the same or different, preferably represent such lower alkyl groups as methyl, ethyl and n-propyl groups; although the groups represented by R and R′ may be different, we prefer that they are the same. A preferred ladder-like lower alkylpolysilsesquioxane is a ladder-like methylpolysilsesquioxane, in which R and R′ both represent methyl groups. In this case, the ladder-like methylpolysilsesquioxane has a particularly high heat resistance and even an uncured ladder-like methylpolysilsesquioxane, when calcined by gradually raising the temperature from ambient temperature to 700°C in the air, has a weight retention of 80—90%. Once the ladder-like methylpolysilsesquioxane has been heat-cured at 450°C in nitrogen for 2 hours, the cured product shows no reduction in weight even when it is subsequently heated to 730°C in nitrogen and the weight retention is 95—96% when it is calcined at 800°C in nitrogen.

In the above formula, *n* represents the average degree of polymerization and a lower alkylpolysilsesquioxane having a standard polystyrene-reduced weight average molecular weight of from 40,000 to 500,000, as measured by GPC, is preferred in view of its heat resistance and ease of handling. A standard polystyrene-reduced weight average molecular weight of from 50,000 to 300,000 is particularly preferred.

In this ladder-like lower alkylpolysilsesquioxane, from 15 to 30% by weight should have a standard polystyrene-reduced molecular weight, as measured by GPC, of 20,000 or less. If this amount is less than 15% by weight, cracks form when the lower alkylpolysilsesquioxane is heated at high temperatures; on the other hand, if the amount is greater than 30% by weight, cracks also form on heating at high temperatures, storage stability becomes bad and gelation tends to occur.

A ladder-like methylpolysilsesquioxane in accordance with the present invention (R and R′ both represent methyl groups) may, for example, be prepared by dissolving methyltrichlorosilane ($CH_3SiCl_3$) in an organic solvent comprising at least 50% by volume of a ketone or an ether, adding water to the resulting solution, with

stirring, to hydrolize the methyltrichlorosilane, condensing the hydrolyzate and, if necessary, adjusting the molecular weight distribution of the product, e.g. by fractionation, fractional gel permeation chromatography or blending, to give a product wherein the portion having a standard polystyrene-reduced molecular weight of 20,000 or less, as measured by GPC, is present in an amount of from 15 to 30% by weight. Other alkylpolysilsesquioxanes are similarly prepared from corresponding alkyltrichlorosilanes.

The organic solvent employed in the above process comprises at least 50% by volume of a ketone or an ether, but we prefer to use a ketone or an ether alone as the organic solvent. The nature of the ketone or ether employed is not critical. Suitable ketones include methyl ethyl ketone, diethyl ketone, and methyl isobutyl ketone. Suitable ethers includes ethylene glycol dimethyl ether, di-n-propyl ether, dioxan, and diethylene glycol dimethyl ether. If a mixture of a ketone and an ether is used, the weight average molecular weight of the resulting ladder-like methylpolysilesesquioxane is, in some cases, lower than that when either a ketone or an ether is used alone. However, if two or more ketones or two or more ethers are used, the problem of lowering of the weight average molecular weight is not normally experienced. The ketone or ether may also be used in admixture with another organic solvent, provided that the ketone or ether content is at least 50% by volume. Suitable such other solvents include: aliphatic hydrocarbons, such as pentane or octane, aromatic hydrocarbons, such as toluene or xylene, halogenated hydrocarbons, such as 1,2-dichloroethane, 1,1,2-trichloroethane, 1,3-dichloropropane or chlorobenzene, aliphatic alcohols, such as propanol, butanol or isobutanol; and fatty acid alkyl esters, such as ethyl propionate, ethyl isobutyrate or isobutyl acetate.

The amount of ketone or ether used as solvent in the above process is not critical, but we prefer to employ from 5 to 20 parts by volume of ketone or ether per part by volume of methyltrichlorosilane. If a mixture of a ketone or an ether with another solvent is employed, the amount of mixtures is preferably such that the amount of ketone or ether itself falls within the above range.

When adding the water to the methyltrichlorosilane solution, the water is preferably added gradually, with stirring, since this enables the reaction to be controlled more easily. The amount of water is preferably from 3 to 30 moles per mole of methyltrichlorosilane.

After the water has been added, the reaction mixture is heated on an oil bath or the like. The heating temperature may be any temperature up to 130°C, but lower temperatures require a longer heating time. Accordingly, we prefer to heat at a temperature of from 80°C to 120°C for a time of from 2 to 6 hours. During the heating operation, the reaction mixture may be stirred or may merely be left as the solvent refluxes.

The hydrolysis of the methyltrichlorosilane and further condensation of the hydrolyzate is preferably effected in the presence of an amine, since the presence of an amine enables the reaction to proceed smoothly, even when the methyltrichlorosilane concentration is high, thus allowing a ladder-like methylpolysilsesquioxane having a high molecular weight to be obtained. Various primary, secondary or tertiary amines (for example triethylamine, tri-n-propylamine, triisopropylamine, diethylamine, ethylamine, pyridine or ethylenediamine) are suitable for this purpose, triethylamine and diethylamine being most suitable. The amine may be added to the methyltrichlorosilane solution before water is added or it may be added to the organic solvent comprising at least 50% by volume of a ketone or an ether before the methyltrichlorosilane is dissolved therein. The amount of amine used, although not critical, is preferably up to 3 moles, more preferably from 0.3 to 2 moles, per mole of methyltrichlorosilane.

When an amine is used, a white precipitate of the hydrochloride of the amine added gradually forms as water is added to the methyltrichlorosilane solution, but this white precipitate dissolves as further water is added. When the addition of water is complete, the reaction mixture is heated, in the same way as when no amine is present.

After completion of the reaction, regardless of whether an amine is or is not used, the solvent layer is washed with water and this washing is repeated until the washings become neutral, after which the solvent layer is preferably dried with a desiccant (e.g. anhydrous calcium sulphate) in order to prevent the ladder-like methylpolysilsesquioxane from gelling to give a gelled methylpolysilsesquioxane solution, and, if necessary, the solvent is then removed to give the desired ladder-like methylpolysilsesquioxane.

Other lower alkylpolysilsesquioxanes may be prepared by processes similar to that described above but using other appropriate alkylsilanes.

If the molecular weight distribution of the ladder-like lower alkylpolysilsesquioxane obtained by the process described above or a similar process is found to be unsatisfactory in that the content of the portion having a standard polystyrene-reduced molecular weight of 20,000 or less (preferably from 800 to 20,000), as measured by GPC, is outside the range of from 15 to 30% by weight, the product thus obtained may be subjected to adjustment of its molecular weight distribution by various methods, including fractionation, fractional gel permeation chromatography or blending, in order to bring the aforementioned lower molecular weight portion within the range of from 15 to 30% by weight.

In the fractionation method, the ladder-like lower alkylpolysilsesquioxane solution obtained as described above is mixed with a solvent in which the ladder-like lower alkylpolysilsesquioxane will not dissolve (for example acetonitrile), thus fractionally precipitating the ladder-like lower alkylpolysilsesquioxane to give

a product having the desired molecular weight distribution. In this case, it is necessary to select properly the concentration of the ladder-like lower alkylpolysilsesquioxane solution and the type and amount of the solvent in which this lower alkylpolysilsesquioxane will not dissolve.

In the case of fractional gel permeation chromatography, the ladder-like lower alkylpolysilsesquioxane solution obtained as described above is subjected to GPC to eliminate the undesired molecular weight fraction and to recover a solution of the ladder-like lower alkylpolysilsesquioxane having the desired molecular weight distribution, if necessary, the solvent is then removed from the recovered solution to give the desired ladder-like lower alkylpolysilsesquioxane.

The blending method is performed by mixing solutions of two or more ladder-like lower alkylpolysilsesquioxanes having differing molecular weight distributions and then removing the solvent, where necessary, to give a blended ladder-like lower alkylpolysilsesquioxane having the desired molecular weight distribution.

The ladder-like lower alkylpolysilsesquioxane of the present invention having the specified molecular weight distribution can be formed into a thin film by dissolving it in an appropriate solvent, coating the resulting solution on a substrate and then drying the coating. Suitable coating methods include spray coating and spinner coating. A thin film formed by such a method will not crack when the solvent is evaporated to dry the resin before heat-curing or after heat-curing and will not even crack if it is subjected to heat at 400—500°C after heat-curing. As a result, this film can be used as a heat-resistant, insulating protective film or as a heat-resistant interlayer insulating film, particularly for electronic parts for integrated circuits.

The invention is further illustrated by the following Examples and by the accompanying drawings, which show gel permeation chromatography charts (GPC charts) of the ladder-like lower alkylpolysilsequioxanes obtained in Examples 1 and 2 and Comparative Examples 1 and 2. In the charts, the ordinate indicates the concentration of the ladder-like lower alkylpolysilsesquioxane solution separated by GPC and the abscissa indicates the standard polystyrene-reduced molecular weight. In the Examples and Comparative Examples, the GPC measurement was conducted under the following conditions:

Apparatus: High temperature high speed gel-permeation chromatogram manufactured by the Waters Company in the U.S.A. (Model 150-C ALC/GPC)

Column: Shodex A-8M manufactured by Showa Denko Company Limited (length: 50 cm)

Measurement

Temperature: 40°C

Flow Rate: 1 cc/min.

Under the above conditions, tetrahydrofuran was used as the solvent, and 1 g of the laddery lower alkylpolysilsesquioxane was dissolved in 100 cc of said solvent. The resulting solutions were used as test samples. As the standard polystyrene, there was used the standard polystyrene manufactured by the Pressure Chemical company in the U.S.A.

Example 1

In a reactor equipped with a refluxing condenser, a dropping funnel and a stirrer was placed 1200 ml of methyl isobutyl ketone, and thereto were added 140 ml of $CH_3SiCl_3$ and 80 ml of triethylamine. The reactor was cooled with ice and 200 ml of water was added dropwise gradually, with stirring, to the reactor. A white precipitate of triethylamine hydrochloride was formed gradually in the course of this operation, but it dissolved as further water was added. Upon completion of water addition, the reaction mixture was refluxed for 5 hours on an oil bath at 100°C. After the completion of the reaction, the solvent layer was washed with water until the washings became neutral, followed by drying with anhydrous sodium sulfate as a desiccant. Then the desiccant was removed and the solvent was removed by distillation under reduced pressure to obtain a laddery methylpolysilsesquioxane. This laddery methylpolysilsesquioxane was dried in vacuo overnight at 40°C and then subjected to the measurement of molecular weight by GPC, to obtain the curve *a* in the GPC chart of the accompanying drawings. It is understood from this curve that the product contains the low molecular weight portion of a standard polystyrene-reduced molecular weight of not more than 20,000, specifically 800 to 20,000, in a proportion of 27% by weight, and has a standard polystyrene-reduced weight average molecular weight of 110,000.

In 10 ml of toluene was dissolved 2.5 g of the thus obtained laddery methylpolysilsesquioxane and the resulting solution was spinner coated on a silicon wafer at 1,500 r.p.m. The coated product was then heated at 80°C for one hour to remove the solvent and then heat-cured at 350°C for one hour to obtain a thin film. This thin film was further subjected to a heat treatment at 450°C for 30 min and then allowed to stand at room temperature. In this case, no cracking was also caused. The thickness of the film obtained was 2 μm.

Comparative Example 1

The methyl isobutyl ketone solution of the laddery methylpolysilsesquioxane obtained in Example 1 was concentrated until the concentration became 28% by weight (the liquid amount being 300 ml), and the concentrate was poured into 4 liters of acetonitrile to precipitate the laddery methylpolysilsesquioxane. The thus obtained laddery methylpolysilsesquioxane was dried in vacuo overnight at 40°C and then subjected to the measurement of molecular weight by GPC to obtain the curve *b* in the GPC chart in the accompanying drawings. It is seen from this curve that the low molecular weight

portion of a standard polystyrene-reduced molecular weight of not more than 20,000, specifically 800 to 20,000, was contained in a proportion of 13% by weight, and that the standard polystyrene-reduced weight average molecular weight was 161,000. That is, the proportion of the low molecular weight portion was smaller than that in Example 1.

In 10 ml of toluene was dissolved 2.5 g of the thus obtained laddery methylpolysilsesquioxane, and the resulting solution was spinner-coated on a silicon wafer at 1,500 r.p.m., and the coated product was heated at 80°C for one hour, then heat-cured at 350°C for one hour and subsequently heat-treated at 450°C for 30 minutes as in Example 1, upon which cracks were formed in the thin film. The thickness of this thin film was 2 μm.

Example 2

The methyl isobutyl ketone solution of the laddery methylpolysilsesquioxane obtained according to Example 1 from which the desiccant had been removed was concentrated until the concentration reached 60% by weight (liquid amount, 150 ml), and the concentrate was poured into 450 ml of acetonitrile to precipitate the laddery methylpolysilsesquioxane. The thus obtained laddery methylpolysilsesquioxane was dried in vacuo overnight at 40°C and then subjected to the measurement of molecular weight distribution by GPC to obtain the curve *c* in the GPC chart of the accompanying drawings. It is seen from this curve that the low molecular weight portion of a standard polystyrene-reduced molecular weight of not more than 20,000, specifically 800 to 20,000, was contained in a proportion of 20% by weight, and the standard polystyrene-reduced weight average molecular weight was 136,000.

In 10 ml of toluene was dissolved 2.5 g of the thus obtained laddery methylpolysilsesquioxane and the resulting solution was spinner-coated on a silicon wafer at 2,000 r.p.m. The coated product was heated at 80°C for one hour, then heat-cured at 350°C for one hour and subsequently heat-treated at 450°C for 30 minutes as in Example 1, upon which no cracks were formed. The thickness of the thin film thus obtained was 1.8 μm.

Comparative Example 2

In 33 ml of toluene was dissolved 8 g of the laddery methylpolysilsesquioxane obtained in Example 1, and to the resulting solution was added 56 ml of acetonitrile while maintaining the solution at 25°C. The resulting mixture was well stirred. Upon the formation of precipitates, the precipitate and the supernatant were subjected to a centrifuge at 15,000 r.p.m. for 40 minutes to separate them. To the supernatant thus obtained was added 8 ml of acetonitrile while maintaining the solution at 25°C, and the resulting mixture was well stirred. Upon the formation of precipitates, the precipitates and the supernatent were subjected again to a centrifuge at 15,000 r.p.m. for 40 minutes. Subsequently, the supernatant was removed by distillation under reduced pressure, and the residue was dried at 40°C overnight in vacuo. The molecular weight distribution of the laddery methylpolysilsesquioxane was measured by GPC to obtain the curve *d* in the GPC chart in the accompanying drawings. From this curve, it is seen that the low molecular weight portion of a standard polystyrene-reduced molecular weight of not more than 20,000, specifically 800 to 20,000, was contained in a proportion of 39% by weight and the standard polystyrene-reduced weight average molecular weight was 33,000. Thus, the proportion of the low molecular weight portion was larger than that in Example 1.

In 10 ml of toluene was dissolved 2.5 g of the laddery methylpolysilsesquioxane thus obtained, and the resulting solution was spinner-coated on a silicon wafer at 2,000 r.p.m. The coated product was heated at 80°C for one hour, then heat-cured at 350°C for one hour and subsequently heat-treated at 450°C for 30 minutes, upon which cracks were formed in the thin film thus obtained. The thickness of the thin fim was 1.7 μm.

**Claims**

1. A ladder-like lower alkylpolysilsesquioxane having a repeating unit of formula:

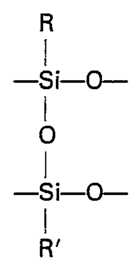

(in which R and R′ are the same or different and each represents a lower alkyl group), characterized in that from 15 to 30% by weight of the ladder-like lower alkylpolysilsesquioxane is constituted by a low molecular weight portion having a standard polystyrene-reduced molecular weight of 20,000 or less, as measured by gel permeation chromatography.

2. A ladder-like lower alkylpolysilsesquioxane according to Claim 1, having the formula:

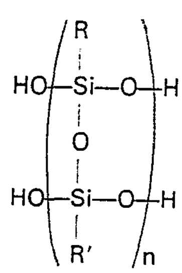

(in which R and R′ are as defined in Claim 1 and *n* represents the average degree of polymerization).

3. A ladder-like lower alkylpolysilsesquioxane

according to Claim 1 or Claim 2, in which R and R' are the same or different and each represents a methyl, ethyl or n-propyl group.

4. A ladder-like lower alkylpolysilsesquioxane according to any preceding Claim, in which R and R' are the same.

5. A ladder-like lower alkylpolysilsesquioxane according to Claim 4, in which R and R' both represent methyl groups.

6. A ladder-like lower alkylpolysilsesquioxane according to any preceding Claim, in which the standard polystyrene-reduced weight average molecular weight of the whole polymer is from 40,000 to 500,000.

7. A ladder-like lower alkylpolysilsesquioxane according to Claim 6, in which the standard polystyrene-reduced weight average molecular weight of the whole polymer is from 50,000 to 300,000.

8. A ladder-like lower alkylpolysilsesquioxane according to any preceding Claim, in which the low molecular weight portion has a standard polystyrene-reduced molecular weight of from 800 to 20,000.

9. A process for preparing a ladder-like alkylpolysilsesquioxane according to Claim 1, which comprises dissolving an alkyltrichlorosilane in an organic solvent comprising at least 50% by volume of a ketone or an ether, adding water to the resulting solution to hydrolize the alkyltrichlorosilane, condensing the hydrolyzate and, if necessary, adjusting the molecular weight distribution of the product, to give a product wherein the portion having a standard polystyrene-reduced molecular weight of 20,000 or less, as measured by gel permeation chromatograpy, is present in an amount of from 15 to 30% by weight.

10. A process according to Claim 9, in which said alkyltrichlorosilane is methyltrichlorosilane and said alkylpolysilsesquioxane is a methylpolysilsesquioxane.

11. A process according to Claim 10, in which the molecular weight distribution is adjusted by fractionation, fractional gel permeation chromatography or blending.

12. A process according to Claim 10 or Claim 11, in which the low molecular weight portion of the ladder-like methylpolysilsesquioxane has a standard polystyrene-reduced molecular weight of from 800 to 20,000.

13. A process according to any one of Claims 10, 11 and 12, in which the ladder-like methylpolysilsesquioxane as a whole has a standard polystyrene-reduced weight average molecular weight of from 40,000 to 500,000.

14. A process according to any one of Claims 10 to 13, in which said methyltrichlorosilane is dissolved in an organic solvent comprising at least 50% by volume of a ketone.

15. A process according to any one of Claims 10 to 13, in which said organic solvent consists of a ketone or of a mixture of two or more ketones.

16. A process according to Claim 14 or Claim 15, in which said ketone is methyl ethyl ketone, diethyl ketone or methyl isobutyl ketone.

17. A process according to any one of Claims 10 to 13, in which said methyltrichlorosilane is dissolved in an organic solvent comprising at least 50% by volume of an ether.

18. A process according to any one of Claims 10 to 13, in which said organic solvent consists of an ether or of a mixture of two or more ethers.

19. A process according to Claim 17 or Claim 18, in which said ether is ethylene glycol dimethyl ether, di-n-propyl ether, dioxan or diethylene glycol dimethyl ether.

20. A process according to any one of Claims 10 to 13, in which said organic solvent comprises an aliphatic hydrocarbon, an aromatic hydrocarbon, a halogenated hydrocarbon, an aliphatic alcohol or a fatty acid alkyl ester in an amount less than 50% by volume.

21. A process according to any one of Claims 10 to 20, in which the amount of ketone used is from 5 to 20 parts by volume per part by volume of methyltrichlorosilane.

22. A process according to any one of Claims 10 to 20, in which the amount of ether used is from 5 to 20 parts by volume per part by volume of methyltrichlorosilane.

23. A process according to any one of Claims 10 to 22, in which said water is employed in an amount of from 3 to 30 moles per mole of methyltrichlorosilane.

24. A process according to any one of Claims 10 to 23, in which the condensation temperature is 130°C or below.

25. A process according to Claim 24, in which the condensation temperature is from 80°C to 120°C.

26. A process according to Claim 25, in which the condensation reaction is effected for a period of from 2 to 6 hours.

27. A process according to any one of Claims 10 to 26, in which the condensation reaction is effected in the presence of an amine.

28. A process according to Claim 27, in which said amine is triethylamine, tri-n-propylamine, triisopropylamine, diethylamine, ethylamine, pyridine or ethylenediamine.

29. A process according to Claim 27, in which said amine is triethylamine or diethylamine.

30. A process according to any one of Claims 27 to 29, in which said amine is used in an amount up to 3 moles per mole of methyltrichlorosilane.

31. A process according to Claim 30, in which said amine is used in an amount of from 0.3 to 2 moles per mole of methyltrichlorosilane.

**Patentansprüche**

1. Leiterartiges Niederalkylpolysilsesquioxan mit einer Wiederholungseinheit der Formel

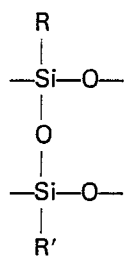

(worin R und R' gleich oder verschieden sind und jedes eine Niederalkylgruppe darstellt), dadurch gekennzeichnet, daß 15 bis 30 Gew.% des leiterartigen Niederalkylpolysilsesquioxans aus einem Niedrigmolekulargewichtsteil mit einem polystyrolreduzierten Standardmolekulargewicht von 20.000 oder weniger, durch Geldurchringungschromatographie gemessen, bestehen.

2. Leiterartiges Niederalkylpolysilsesquioxan nach Anspruch 1, mit der Formel

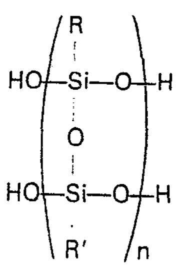

(worin R und R' sind, wie im Anspruch 1 definiert, und *n* den Durchschnittspolymerisationsgrad darstellt).

3. Leiterartiges Niederalkylpolysilsesquioxan nach Anspruch 1 oder 2, in dem R und R' gleich oder verschieden sind und jedes eine Methyl-, Ethyl- oder n-Propylgruppe darstellt.

4. Leiterartiges Niederalkylpolysilsesquioxan nach irgendeinem vorhergehenden Anspruch, in dem R und R' gleich sind.

5. Leiterartiges Niederalkylpolysilsesquioxan nach Anspruch 4, in dem R und R' beide Methylgruppen darstellen.

6 Leiterartiges Niederalkylpolysilsesquioxan nach irgendeinem vorhergehenden Anspruch, in dem das polystyrolgewichtreduzierte Standarddurchschnittsmolekulargewicht des ganzen Polymers 40.000 bis 500.000 ist.

7. Leiterartiges Niederalkylpolysilsesquioxan nach Anspruch 6, in dem das polystyrolgewichtreduzierte Standarddurchschnittsmolekulargewicht des ganzen Polymers 50.000 bis 300.000 ist.

8. Leiterartiges Niederalkylpolysilsesquioxan nach irgeneinem vorhergehenden Anspruch, in dem der Niedrigmolekulargewichtsteil ein polystyrolreduziertes Standardmolekulargewicht von 800 bis 20.000 hat.

9. Verfahren zur Herstellung eines leiterartigen Alkylpolysilsesquioxans nach Anspruch 1, das ein Auflösen eines Alkyltrichlorsilans in einem organischen Lösungsmittel mit wenigstens 50 Vol.% eines Ketons oder eines Äthers, einen Zusatz von Wasser zur erhaltenen Lösung zum Hydrolysieren des Alkyltrichlorsilans, ein Kondensieren des Hydrolysats und, falls erforderlich, ein Justieren der Molekulargewichtsverteilung des Produkts zum Erhalten eines Produkts umfaßt, in dem der ein durch Geldurchdringungschromatographie gemessenes polystyrolreduziertes Standardmolekulargewicht von 20.000 oder weniger aufweisende Teil in einer Menge von 15 bis 30 Gew.% vorliegt.

10. Verfahren nach Anspruch 9, in dem das Alkyltrichlorsilan Methyltrichlorsilan ist und das Alkylpolysilsesquioxan ein Methylpolysilsesquioxan ist.

11. Verfahren nach Anspruch 10, in dem die Molekulargewichtverteilung durch Fraktionierung, fraktionierte Geldurchdringungschromatographie oder Mischen justiert wird.

12. Verfahren nach Anspruch 10 oder Anspruch 11, in dem der Niedrigmolekulargewichsteil des leiterartigen Methylpolysilsesquioxans ein polystyrolreduziertes Standardmolekulargewicht von 800 bis 20.000 hat.

13. Verfahren nach irgendeinem der Ansprüche 10, 11 und 12, in dem das leiterartige Methylpolysilsesquioxan als ganzes ein polystyrolgewichtsreduziertes Standarddurchscnittsmolekulargewicht von 40.000 bis 500.000 hat.

14. Verfahren nach irgendeinem der Ansprüche 10 bis 13, in dem das Methyltrichlorsilan in einem organischen Lösungsmittel mit wenigstens 50 Vol% eines Ketons aufgelöst wird.

15. Verfahren nach irgendeinem der Ansprüche 10 bis 13, in dem das organische Lösungsmittel aus einem Keton oder einer Mischung von zwei oder mehr Ketonen besteht.

16. Verfahren nach Anspruch 14 oder Anspruch 15, in dem das Keton Methylethylketon, Diethylketon oder Methylisobutylketon ist.

17. Verfahren nach irgendeinem der Ansprüche 10 bis 13, in dem das Methyltrichlorsilan in einem organischen Lösungsmittel mit wenigstens 50 Vol.% eines Äthers aufgelöst wird.

18. Verfahren nach irgendeinem der Ansprüche 10 bis 13, in dem das organische Lösungsmittel aus einem Äther oder einer Mischung von zwei oder mehr Äthern besteht.

19. Verfahren nach Anspruch 17 oder Anspruch 18, in dem der Äther Ethylenglycoldimethyläther, Di-n-propyläther, Dioxan oder Diethylenglycoldimethyläther ist.

20. Verfahren nach irgendeinem der Ansprüche 10 bis 13, in dem das organische Lösungsmittel einen aliphatischen Kohlenwasserstoff, einen aromatischen Kohlenwasserstoff, einen halogenierten Kohlenwasserstoff, einen aliphatischen Alkohol oder einen Fettsäurealkylester in einer Menge unter 50 Vol.% aufweist.

21. Verfahren nach irgendeinem der Ansprüche

10 bis 20, in dem die verwendete Ketonmenge 5 bis 20 Volumenteile je Volumenteil des Methyltrichlorsilans ist.

22. Verfahren nach irgendeinem der Ansprüche 10 bis 20, in dem die verwendete Äthermenge 5 bis 20 Volumenteile je Volumenteil des Methyltrichlorsilans ist.

23. Verfahren nach irgendeinem der Ansprüche 10 bis 22, in dem das Wasser in einer Menge von 3 bis 30 Molen je Mol des Methyltrichlorsilans verwendet wird.

24. Verfahren nach irgendeinem der Ansprüche 10 bis 23, in dem die Kondensationstemperatur 130°C oder darunter ist.

25. Verfahren nach Anspruch 24, in dem die Kondensationstemperatur 80°C bis 120°C ist.

26. Verfahren nach Anspruch 25, in dem die Kondensationsreaktion für eine Dauer von 2 bis 6 Stunden durchgeführt wird.

27. Verfahren nach irgendeinem der Ansprüche 10 bis 26, in dem die Kondensationsreaktion in der Gegenwart eines Amins durchgeführt wird.

28. Verfahren nach Anspruch 27, in dem das Amin Triethylamin, Tri-n-propylamin, Triisopropylamin, Diethylamin, Ethylamin, Pyridin oder Ethylendiamin ist.

29. Verfahren nach Anspruch 27, in dem das Amin Triethylamin oder Diethylamin ist.

30. Verfahren nach irgendeinem der Ansprüche 27 bis 29, in dem das Amin in einer Menge von bis zu 3 Molten je Mol des Methyltrichlorsilans verwendet wird.

31. Verfahren nach Anspruch 30, in dem das Amin in einer Menge von 0,3 bis 2 Molen je Mol des Methyltrichlorsilans verwendet wird.

**Revendications**

1. Alkyl(inférieur)-polysilsesquioxane en échelle ayant une unité répétitive de formule:

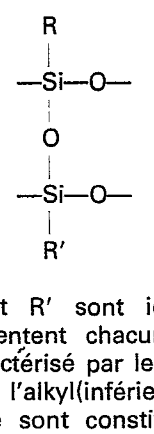

(dans laquelle R et R' sont identiques ou différents et représentent chacun un groupe alkyle inférieur), caractérisé par le fait que 15 à 30% en poids de l'alkyl(inférieur)-polysilsesquioxane en échelle sont constitués par une fraction à faible poids moléculaire ayant un poids moléculaire, ramené au polystyrène de référence, de 20 000 ou moins, tel que déterminé par chromatographie par perméation de gel.

2. Alkyl(inférieur) - polysilsesquioxane en échelle selon la revendication 1, ayant pour formule:

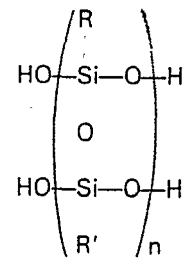

(dans laquelle R et R' sont tels que définis dans la revendication 1 et n représente le degré moyen de polymérisation).

3. Alkyl(inférieur) - polysilsesquioxane en échelle selon la revendication 1 ou la revendication 2, dans lequel R et R' sont identiques ou différents et représentent chacun un groupé méthyle, éthyle ou n-propyle.

4. Alkyl(inférieur) - polysilsesquioxane en échelle selon l'une quelconque des revendications précédentes, dans lequel R et R' sont identiques.

5. Alkyl(inférieur) - polysilsesquioxane en échelle selon la revendication 4, dans lequel R et R' représentent tous les deux des groupes méthyle.

6. Alkyl(inférieur) - polysilsesquioxane en échelle selon l'une quelconque des revendications précédentes, dans lequel la masse moléculaire moyenne en poids du polymère entier, déduite du polystyrène de référence, est de 40 000 à 500 000.

7. Alkyl(inférieur) - polysilsesquioxane en échelle selon la revendication 6, dans lequel la masse moléculaire moyenne en poids du polymère entier, déduite du polystyrène de référence, est de 50 000 à 300 000.

8. Alkyl(inférieur) - polysilsesquioxane en échelle selon l'une quelconque des revendications précédentes, dans lequel la fraction à faible poids moléculaire a un poids moléculaire, déduit du polystyrène de référence, de 800 à 20 000.

9. Procédé pour la préparation d'un alklpolysilsesquioxane en échelle selon la revendication 1, qui comprend la dissolution d'un alkyltrichlorosilane dans un solvant organique comprenant au moins 50% en volume d'une cétone ou d'un éther, l'addition d'eau à la solution résultante pour hydrolyser l'alkyltrichlorosilane, la condensation de l'hydrolysat et, si nécessaire, l'ajustement de la distribution de poids moléculaire du produit, pour aboutir à un produit dans lequel la fraction ayant un poids moléculaire, ramené au polystyrène de référence, de 20 000 ou moins, tel que mesuré par chromatographie par perméation de gel, est présente en une quantité allant de 15 à 30% en poids.

10. Procédé selon la revendication 9, dans lequel ledit alkyltrichlorosilane est le méthyltrichlorosilane et ledit alkylpolysilsesquioxane est un méthylpolysilsesquioxane.

11. Procédé selon la revendication 10, dans lequel la distribution de poids moléculaire est

ajustée par fractionnement, chromatographie par perméation de gel fractionnée, ou par mélange.

12. Procédé selon la revendication 10 ou la revendication 11, dans lequel la fraction à faible poids moléculaire du méthylpolysilsesquioxane en échelle a un poids moléculaire, polystyrène de référence, allant de 800 à 20 000.

13. Procédé selon l'une quelconque des revendications 10, 11 et 12, dans lequel le méthylpolysilsesquioxane en échelle dans son ensemble a une masse moléculaire moyenne en poids ramené au polystyrène de référence, allant de 40 000 à 500 000.

14. Procédé selon l'une quelconque des revendications 10 à 13, dans lequel ledit méthyltrichlorosilane est dissous dans un solvant organique comprenant au moins 50% en volume d'une cétone.

15. Procédé selon l'une quelconque des revendications 10 à 13, dans lequel ledit solvant organique consiste en une cétone ou en un mélange de deux cétones ou plus.

16. Procédé selon la revendication 14 ou la revendication 15, dans lequel ladite cétone est la méthyléthylcétone, la diéthylcétone ou la méthylisobutylcétone.

17. Procédé selon l'une quelconque des revendications 10 à 13, dans lequel ledit méthyltrichlorosilane est dissous dans un solvant organique comprenant au moins 50% en volume d'un éther.

18. Procédé selon l'une quelconque des revendications 10 à 13, dans lequel ledit solvant organique consiste en un éther ou en un mélange de deux éthers ou plus.

19. Procédé selon la revendication 17 ou la revendication 18, dans lequel ledit éther est l'éther diméthylique d'éthylèneglycol l'éther di-n-propylique, le dioxanne ou l'éther diméthylique de diéthylèneglycol.

20. Procédé selon l'une quelconque des revendications 10 à 13, dans lequel ledit solvant organique comprend un hydrocarbure aliphatique, un hydrocarbure aromatique, un hydrocarbure halogéné, un alcool aliphatique ou un ester alkylique d'acide gras, en une quantité inférieure à 50% en volume.

21. Procédé selon l'une quelconque des revendications 10 à 20, dans lequel la quantité de cétone utilisée est de 5 à 20 parties en volume par partie en volume de méthyltrichlorosilane.

22. Procédé selon l'une quelconque des revendications 10 à 20, dans lequel la quantité d'éther utilisée est de 5 à 20 parties en volume par partie en volume de méthyltrichlorosilane.

23. Procédé selon l'une quelconque des revendications 10 à 22, dans lequel ladite eau est utilisée en une quantité de 3 à 30 moles par mole de méthyltrichlorosilane.

24. Procédé selon l'une quelconque des revendications 10 à 23, dans lequel la température de condensation est de 130°C ou au-dessous.

25. Procédé selon la revendication 24, dans lequel la température de condensation est de 80 à 120°C.

26. Procédé selon. la revendication 25, dans lequel la réaction de condensation est effectuée pendant une durée de 2 à 6 heures.

27. Procédé selon l'une quelconque des revendications 10 à 26, dans lequel la réaction de condensation est effectuée en présence d'une amine.

28. Procédé selon la revendication 27, dans lequel ladite amine est la triéthylamine, la tri-n-propylamine, la tri-isopropylamine, la diéthylamine, l'éthylamine, la pyridine ou l'éthylènediamine.

29. Procédé selon la revendication 27, dans lequel ladite amine est la triéthylamine ou la diéthylamine.

20. Procédé selon l'une quelconque des revendications 27 à 29, dans lequel ladite amine est utilisée en une quantité allant jusqu'à 3 moles par mole de méthyltrichlorosilane.

31. Procédé selon la revendication 30, dans lequel ladite amine est utilisée en une quatité allant de 0,3 à 2 moles par mole de méthyltrichlorosilane.

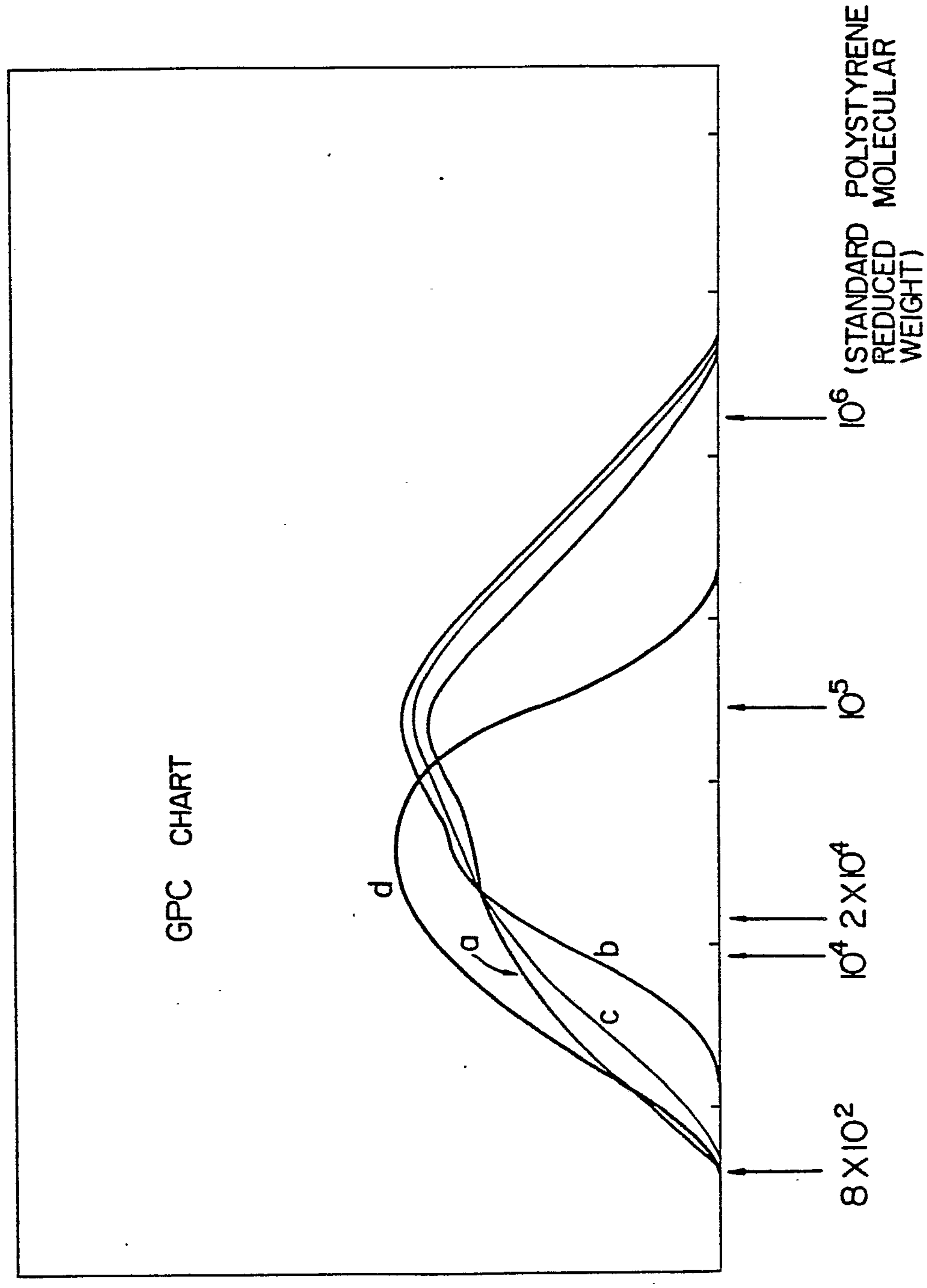
GPC CHART
a
b
c
d
8 X 10^2
10^4
2 X 10^4
10^5
10^6 (STANDARD POLYSTYRENE REDUCED MOLECULAR WEIGHT)